# EUROPÄISCHE PATENTSCHRIFT

(11) **EP 0 690 624 B1**
(45) Veröffentlichungstag und Bekanntmachung des Hinweises auf die Patenterteilung: **28.11.2001**
(21) Anmeldenummer: 95109811.0
(22) Anmeldetag: 23.06.1995
(51) Int. Cl.: H04N 7/088

(54) **Verfahren zum Abspeichern von Teletextdaten**
Method of storing teletext data
Méthode de stockage de données de télétexte

(30) Priorität: 02.07.1994 DE 4423232; 23.12.1994 DE 4446039
(43) Veröffentlichungstag der Anmeldung: 03.01.1996
(73) Patentinhaber: DEUTSCHE THOMSON-BRANDT GMBH, 78048 Villingen-Schwenningen (DE)
(72) Erfinder: Gyarmati, Sandor, D-78052 Villingen-Schwenningen (DE); Lachenmaier, Reinhard, D-78647 Trossingen (DE)

(56) Entgegenhaltungen:
- EP-A- 0 488 454
- EP-A- 0 496 268
- EP-A- 0 525 559
- GB-A- 2 231 470
- US-A- 4 931 870

## Beschreibung

Die Erfindung geht aus von einem Verfahren zum Abspeichern von Teletextdaten gemäß dem Oberbegriff des Anspruchs 1.

Es ist bekannt, Teletextdaten im Echtzeit bzw. im Nichtechtzeitverfahren einzulesen. Für das Einlesen der Daten im Echtzeitverfahren muß ein großer Hardwareaufwand betrieben werden. Wird ein Speicher eingesetzt, der nicht rollierend ausgebildet ist, so ist ein Speichermanager einzusetzen. Wird hindessen ein rollierender Speicher eingesetzt, ist kein Speichermanager erforderlich. Nachteilig hierbei ist der große Aufwand in Speicherverwaltung und Hardware.

Im Nichtechtzeitbetrieb ist es bekannt, die Daten in einen Speicher einzulesen und mit einem Speichermanager in einem weiteren Speicher abzulegen. Nachteilig hierbei ist wiederum der große Aufwand.

Der Erfindung liegt die Aufgabe zugrunde, mit geringem Aufwand ein Verfahren zum Abspeichern von Teletextdaten zu schaffen.

Diese Aufgabe wird durch die im Anspruch 1 angegebenen Merkmale der Erfindung gelöst. Vorteilhafte Weiterbildungen der Erfindung sind in den Unteransprüchen angegeben.

Bei dem erfindungsgemäßen Verfahren werden die Teletextdaten in einen Speicher eingelesen. Es wird überprüft, ob die eingelesenen Teletextdaten angefordert wurden. Bei Anforderung der Teletextdaten werden die Daten in dem Speicher unverändert beibehalten. Bei Nichtanforderung der Daten werden die Daten durch neu eingelesene Daten überschrieben. Dieses System hat den Vorteil, daß die Hardware die Daten unabhängig von der Anforderung zunächst in einem Speicher ablegt. Erst nach dem Ablegen wird entschieden ob die Daten benötigt werden. Dieses System des erst Ablegen und des eventuellen Überschreibens scheint zunächst umständlich, doch es sei erwähnt, daß das Ablegen der Daten ohne Auswertung vonstatten gehen muß um den Hardwareaufwand gering zu halten. Nach dem Ablegen ist jedoch, Zeit bis zum nächsten Einlesen der Daten die eingelesenen Daten auszuwerten. Diese Zeit (ca 18 ms zwischen zwei VBIs)wird also nun vorteilhaft genutzt, um eine sinnvolle Auswertung vorzunehmen. Sinnvoll ist in diesem Sinne also so zu verstehen: Daten die nicht benötigt werden, werden überschrieben, das heißt, gar nicht erst für längere Zeit abgespeichert.

Vorteilhaft ist, daß die Adresse jeder gespeicherten Kopfzeile in einer Tabelle abgelegt wird. Durch einen Suchmechanismus ist sehr schnell der Anfang einer Seite gefunden. Von dort aus erfolgt eine Kopie der Seite und der zugehörigen Reihen aus dem Speicher auf die Darstellungseinheit.

Eine Weiterbildung in der Erfindung besteht darin, daß der Einlauf bestimmter Magazine des Teletextsystems dynamisch für die Dauer einer Seite gesperrt werden kann, nachdem die Kopfzeile erkannt wurde. Dieses minimiert die Leistung, welche die Software nach dem folgenden Einlesevorgang aufbringen müßte, für nicht benötigte Seiten. Die Folge-Datenzeilen einer bereits abgewiesenen Seite erscheinen erst gar nicht im Speicher.

Eine weitere vorteilhafte Weiterbildung der Erfindung wäre, daß der Speicherbereich, indem sich der schiebende Speicher befindet, 8mal vorhanden ist, um acht separate Magazine abspeichern zu können. Dieses hat den Vorteil, daß auch bei Parallelübertragung der Seiten, in den übertragenen Seiten bereits zusammenhängende Seiten in dem zugehörigen Speicher abgelegt werden können und eine Trennung von Datenzeilen der Seiten anderer Magazine nicht notwendig ist. Dieses vereinfacht auch das anschließende Kopieren zur Darstellung, weil keine Filterung der Seiten für die Zugehörigkeit der Daten erfolgen muß.

Im folgenden wird die Erfindung anhand von Beispielen erläutert.

Darin zeigen:

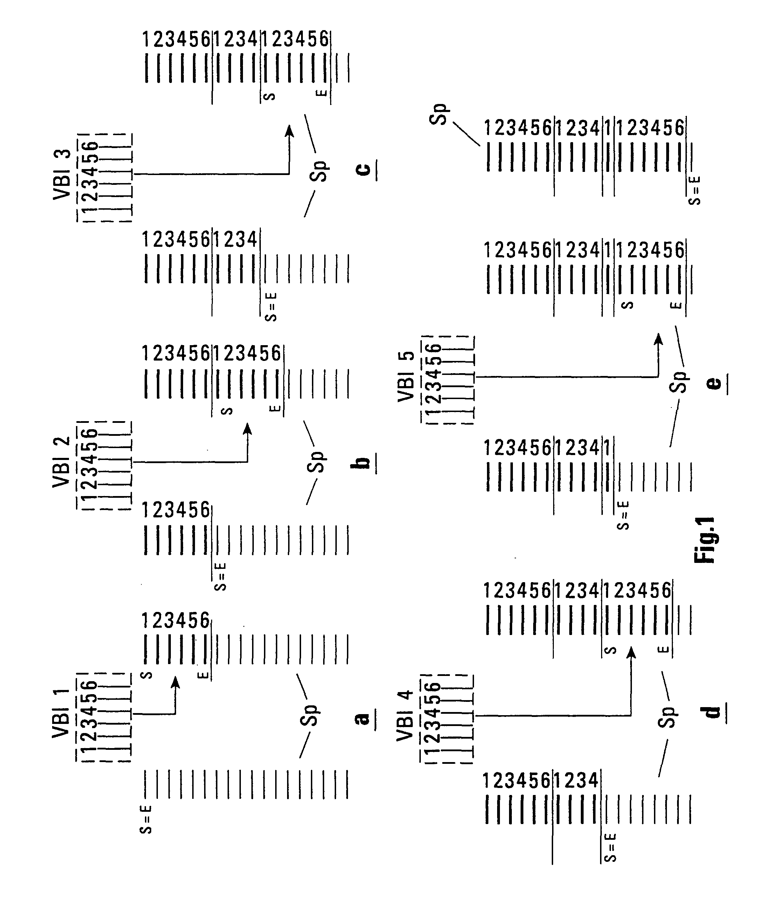

Fig. 1a-1e zeigen das Verfahren zum Abspeichern der Teletextdaten.

Fig. 1a - le stellen die vertikalen Austastlücken VBI1 - VBI5 dar. Innerhalb jeder Austastlücke werden 6 Textdatenzeilen übertragen. Der Speicher Sp ist ein rollierender Speicher, und bei jedem Einlesen der Textdaten wird ein Startpunkt S und am Ende des Einlesens ein Endpunkt E gesetzt.

In Fig. 1a ist, bevor Daten eingelesen werden, der Startpunkt S gleich dem Endpunkt E. Während der vertikalen Austastlücke VBI1 werden die ersten sechs Textdatenzeilen in den Speicher SP eingelesen. Die erste Zeile wird mit dem Startpunkt S und die letzte Zeile mit dem Endpunkt E gekennzeichnet.

Fig. 1b zeigt das weitere Einlesen der Daten bei der zweiten Austastlücke. Vor dem Einlesen der Daten wird softwaremäßig überprüft, ob die bereits in dem Speicher SP abgelegten Daten angefordert wurden. Die Anforderung der Daten geschieht durch das Ablegen von Anforderungsabfragen in einer Tabelle. In Fig. 1b ist dargestellt, daß die Daten wirklich angefordert werden und der Startpunkt S bildet gleichzeitig den Endpunkt E nach den vorher eingelesenen Textdatenzeilen. Die nun während der vertikalen Austastlücke einlaufenden Textdaten werden fortlaufend nach den ersten Textdatenzeilen abgelegt.

Fig. 1c zeigt, daß nicht alle Textdatenzeilen gespeichert blieben, sondern daß der Startpunkt S gleich dem Endpunkt E nach der vierten Zeile beginnt. Die Textdatenzeilen 5 und 6 beinhalteten also keine relevanten Daten oder sie waren nicht angefordert. In der weiteren vertikalen Austastlücke werden die einlaufenden Textdatenzeilen wiederum hinter der letzten Textzeile abgelegt.

Fig. 1d zeigt, daß die Prüfung ergeben hat, daß die vorher eingelaufenen Textdatenzeilen nicht angefordert wurden. Sie werden komplett durch neue Textdatenzeilen, die in der vertikalen Austastlücke eingelaufen sind, überschrieben.

Fig. 1e zeigt, daß nur eine Textdatenzeile angefordert wurde, und nach dieser einen angeforderten Textdatenzeile die einlaufenden Textdatenzeilen in der vertikalen Austastlücke abgespeichert werden. Dieses Verfahren setzt sich fort. Bei Erreichen des Endes des Speichers beginnt das Fortschreiben am Anfang des Speichers durch das Überschreiben von vorhandenen Textdatenzeilen.

## Patentansprüche

1. Verfahren zum Abspeichern von Teletextdaten, die in der vertikalen Austastlücke (VBI 1, ..., VBI 5) eines Fernsehsignals übertragen worden sind, wobei die empfangenen Teletextdaten fortlaufend in einem Speicher (Sp) gespeichert werden, **dadurch gekennzeichnet, daß** die in einer vertikalen Austastlücke (VBI 1) übertragenen Teletextdaten zunächst ohne Prüfung in dem Speicher (Sp) abgelegt werden und nach Empfang der Teletextdaten dieser vertikalen Austastlücke (VBI 1) überprüft wird, ob die gespeicherten Teletextdaten ganz oder teilweise angefordert wurden, wobei angeforderte Daten im Speicher (Sp) beibehalten werden und nicht angeforderte Daten durch Teletextdaten, die in einer darauffolgenden vertikalen Austastlücke (VBI 2) übertragen werden, überschrieben werden.

2. Verfahren nach Anspruch 1, **dadurch gekennzeichnet, daß** vor dem Einlesen der in einer vertikalen Austastlücke übertragenen Teletextdaten in den Speicher (Sp) ein Startpunkt (S) gesetzt wird, wobei einerseits der Startpunkt (S) des Speichers (Sp) für die Abspeicherung der Teletextdaten in der nächsten vertikalen Austastlücke unverändert bleibt, wenn die Teletextdaten der vorangegangenen Austastlücke nicht benötigt werden und anderenfalls der Startpunkt (S) so weit verschoben wird, daß die benötigten Daten der vorangegangenen vertikalen Austastlücke gespeichert bleiben.

3. Verfahren nach Anspruch 1 oder 2, **dadurch gekennzeichnet, daß** die Teletextdaten in Seiten übertragen werden, die mehrere Textdatenzeilen aufweisen und mit einer Kopfzeile beginnen.

4. Verfahren nach Anspruch 3, **dadurch gekennzeichnet, daß** das Überprüfen der Daten anhand des Vergleichs der Kopfzeile mit einer Tabelle erfolgt, in welcher die Nummern der anzufordernden Kopfzeilen abgelegt sind.

5. Verfahren nach Anspruch 3 oder 4, **dadurch gekennzeichnet, daß** der Einlauf bestimmter Magazine des Teletextsystems dynamisch für die Dauer einer Seite gesperrt werden kann, nachdem die Kopfzeile erkannt wird.

6. Verfahren nach einem der Ansprüche 3 bis 5, **dadurch gekennzeichnet, daß** die Seiten für jedes Magazin separat gespeichert werden.

7. Verfahren nach einem der Ansprüche 3 bis 6, **dadurch gekennzeichnet, daß** die Adressen gespeicherter Kopfzeilen in einer Tabelle abgelegt werden, die für das Auffinden des Anfangs gespeicherter Seiten genutzt werden.

## Claims

1. Method for storing teletext data which have been transmitted in the vertical blanking interval (VBI 1, ..., VBI 5) of a television signal, the received teletext data being continuously stored in a memory (Sp), **characterized in that** the teletext data transmitted in a vertical blanking interval (VBI 1) are firstly stored without any checking in the memory (Sp) and, after the teletext data of this vertical blanking interval (VBI 1) have been received, a check is made to determine whether the stored teletext data have been completely or partially requested, requested data being retained in the memory (Sp) and unrequested data being overwritten by teletext data which are transmitted in a subsequent vertical blanking interval (VBI 2).

2. Method according to Claim 1, **characterized in that**, before the teletext data transmitted in a vertical blanking interval are read into the memory (Sp), a start point (S) is set, on the one hand the start point (S) of the memory (Sp) remaining unchanged for the storage of the teletext data in the next vertical blanking interval if the teletext data of the preceding blanking interval are not required, and otherwise the start point (S) being shifted to an extent such that the required data of the preceding vertical blanking interval remain stored.

3. Method according to Claim 1 or 2, **characterized in that** the teletext data are transmitted in pages which have a plurality of text data lines and begin with a header line.

4. Method according to Claim 3, **characterized in that** the data are checked on the basis of the comparison of the header line with a table in which the numbers of the header lines to be requested are stored.

5. Method according to Claim 3 or 4, **characterized in that** the lead-in of specific magazines of the teletext system can be dynamically blocked for the duration of a page after the header line is identified.

6. Method according to one of Claims 3 to 5, **characterized in that** the pages are stored separately for each magazine.

7. Method according to one of Claims 3 to 6, **characterized in that** the addresses of stored header lines are stored in a table, which are utilized for finding the start of stored pages.

## Revendications

1. Méthode de stockage de données de télétexte qui ont été transmises dans l'intervalle de suppression vertical (VBI 1, ..., VBI 5) d'un vidéosignal, où les données de télétexte reçues sont continuellement stockées dans une mémoire (Sp), **caractérisée en ce que** les données de télétexte transmises dans un intervalle de suppression vertical (VBI 1) sont tout d'abord placées sans contrôle dans la mémoire (Sp) et que cet intervalle de suppression vertical (VBI 1) est contrôlé après réception des données de télétexte afin de déterminer si les données de télétexte stockées ont été totalement ou partiellement demandées et où les données demandées sont conservées dans la mémoire (Sp) et les données n'ayant fait l'objet d'aucune demande sont écrasées par des données de télétexte transmises dans un intervalle de suppression vertical suivant (VBI 2).

2. Méthode conforme à la revendication 1, **caractérisée en ce que,** avant la lecture des données de télétexte transmises dans un intervalle de suppression vertical, un point de départ (S) est défini dans la mémoire (Sp), où ce point de départ (S) de la mémoire (Sp) reste inchangé pour le stockage des données de télétexte dans l'intervalle de suppression vertical suivant lorsque les données de télétexte de l'intervalle de suppression précédent ne sont pas utiles et est décalé de sorte que les données utiles de l'intervalle de suppression vertical précédent restent stockées en mémoire.

3. Méthode conforme à la revendication 1 ou 2, **caractérisée en ce que** les données de télétexte sont transmises sous forme de pages comportant plusieurs lignes de données de texte et commençant par une ligne d'en-tête.

4. Méthode conforme à la revendication 3, **caractérisée en ce que** le contrôle des données s'effectue grâce à la comparaison de la ligne d'en-tête avec un tableau répertoriant les numéros des lignes d'en-tête à demander.

5. Méthode conforme à la revendication 3 ou 4, **caractérisée en ce que** l'arrivée de certains magasins du système de télétexte peut être bloquée de façon dynamique, pour la durée d'une page, après identification de la ligne d'en-tête.

6. Méthode conforme à l'une des revendications 3 à 5, **caractérisée en ce que** les pages de chaque magasin peuvent être stockées séparément.

7. Méthode conforme à l'une des revendications 8 à 6, **caractérisée en ce que** les adresses des lignes d'en-tête stockées sont placées dans un tableau utilisé pour rechercher le début des pages stockées.
